# EUROPEAN PATENT APPLICATION

(11) **EP 2 456 210 A2**
(43) Date of publication of application: **23.05.2012**
(21) Application number: 11168396.7
(22) Date of filing: 01.06.2011
(51) Int. Cl.: H04N 13/00

(54) **Image processing apparatus and image processing method**

(30) Priority: 23.11.2010 KR 20100116622
(71) Applicant: Samsung Electronics Co., Ltd., Gyeonggi-do 442-742 (KR)
(72) Inventor: Kim, Shin-haeng, Gyeonggi-do (KR); Han, Seung-hoon, Seoul (KR); Sohn, Young-wook, Gyeonggi-do (KR)
(74) Representative: Clark, David James

(57) **Abstract**

An image processing apparatus and an image processing method are provided. The image processing apparatus includes an image receiver which receives a plurality of image frames each including a first image and a second image respectively corresponding to a first eye and a second eye of a user, and an image processor which detects a pixel of the second image corresponding to at least one pixel of the first image and updates the first image based on information about the detected pixel of the second image.

## Description

### BACKGROUND

### Field

Apparatuses and methods consistent with the exemplary embodiments relate to processing a three-dimensional (3D) image to be displayed, and more particularly, to an image processing apparatus which updates a distorted area of a 3D image frame and an image processing method.

### Description of the Related Art

A related art image processing apparatus processes image signals transmitted from outside according to various processes, and displays processed images on a display panel provided therein, or outputs to a different image processing apparatus. The image processing apparatus receives and processes a three-dimensional (3D) image signal in which one image frame is divided into a left eye image field and a right eye image field, or a two-dimensional (2D) image signal which is not divided as disclosed above to be displayed as an image. To display a 3D image frame, the image processing apparatus performs a process to alternately display a left eye image field and a right eye image field, so that a user perceives 3D effects using binocular parallax.

Various related art processes may be used for the image processing apparatus to process image signals to be displayed. For example, when an image signal transmitted from the outside is encoded based on a preset image compression format, the image processing apparatus decodes the image signal, performs frame rate conversion by generating an interpolated frame through motion estimation and compensation of an object in an image frame, or performs a process of changing a depth value of an object in an image frame in real time. However, while the processes are performed, an image distorted area that is a pixel area where image data is not normally represented may occur in an image frame. Here, it may be important to correct the image distorted area to improve final image quality.

### SUMMARY

According to an aspect of an exemplary embodiment, there is provided an image processing apparatus including: an image receiver which receives a plurality of image frames each including a first image and a second image respectively corresponding to eyes of a user; and an image processor which detects a pixel of the second image corresponding to at least one pixel of the first image and updates the first image based on information about the detected pixel of the second image.

The second image may correspond to at least one of a second image in a first image frame among the plurality of image frames and a second image in a second image frame which has a time difference with respect to the first image frame.

The image processor may detect a pixel of a first image in the second image frame corresponding to at least one pixel of a first image in the first image frame and update an image signal based on information about the detected pixel of the first image.

The image processor may include a frame rate conversion unit to generate an interpolated image frame by motion estimation and motion compensation on the plurality of image frames and generate the interpolated image frame based on the information about the detected pixel of the first image and the information about the detected pixel of the second image.

The image processor may detect an image distorted area of the first image in the first image frame, detect a pixel area corresponding to the image distorted area from the second image, and update the image distorted area based on image data of the detected pixel area.

The image processor may detect a pixel area corresponding to the image distorted area from the first image in the second image frame and update the image distorted area based on image data of the detected pixel area.

The image distorted area may be formed on a boundary area between a first object and a background in the first image.

The image processor may detect a discontinuous boundary between the updated image distorted area and the background in the first image and perform image filtering which eliminates the detected discontinuous boundary.

The image processor may compare pixel values of the first image where the image distorted area is updated and the second image in the first image frame and adjust at least one of the pixel values of the first image and the second image so that a difference between the pixel values of the first image and the second image is within a range.

The image processor may update a brightness value, a color value, or a contrast value between the first image and the second image.

The image processor may detect a pixel area corresponding to the image distorted area from one of the second image of the first image frame, the first image of the second image frame, and the second image of the second image frame based on a binocular disparity between the first image of the first image frame and the second image of the first image frame and update the image distorted area based on image data of the detected pixel area.

The second image frame may include the same object as a first object in the first image frame, and the image processor may determine whether the image data of the detected pixel area corresponds to the image distorted area based on extraction of a motion vector.

The image distorted area of the first image may appear when a first object changes in position based on a change of a depth value of the first object in the first image frame.

The image processor may generate a first image and a second image with respect to the first image frame based on a calculated binocular disparity when an image signal received by the image receiver corresponds to a 2D image, and the image distorted area of the first image may appear by a positional change of a first object based on the binocular disparity.

The image processor may calculate a binocular disparity between the first image and the second image and detect a pixel of the second image corresponding to the at least one pixel of the first image based on the binocular disparity.

The image processor may detect the same object respectively from the first image and the second image of the first image frame and calculate a difference between pixel values based on a position of the first object in a first image and the second image as the binocular disparity.

The image processor may receive the binocular disparity from an outside.

According to an aspect of another exemplary embodiment, there is provided an image processing apparatus including: an image receiver which receives a plurality of image frames each including a first image and a second image respectively corresponding to eyes of a user; and an image processor which includes a frame rate conversion unit to generate an interpolated image frame by motion estimation and motion compensation on the plurality of image frames, calculates a motion vector between the first image and the second image, and generates the interpolated image frame based on the calculated motion vector.

The image processor may detect a binocular disparity between the first image and the second image and generate the interpolated image frame based on the detected binocular disparity.

The second image may correspond to at least one of a second image in a first image frame among the plurality of image frames and a second image in a second image frame which has a time difference to the first image frame.

The image processor may calculate a motion vector between a first image in the first image frame and a first image in the second image frame and generate the interpolated image frame based on the calculated motion vector.

According to an aspect of another exemplary embodiment, there is provided an image processing method including: receiving a plurality of image frames each including a first image and a second image respectively corresponding to eyes of a user, and detecting a pixel of the second image corresponding to at least one pixel of the first image and updating the first image based on information about the detected pixel of the second image.

The second image may correspond to at least one of a second image in a first image frame among the plurality of image frames and a second image in a second image frame which has a time difference to the first image frame.

The updating the first image may include detecting a pixel of a first image in the second image frame corresponding to at least one pixel of a first image in the first image frame and updating an image signal based on information about the detected pixel of the first image.

The updating the first image may include generating an interpolated image frame based on the information about the pixel of the first image and the information about the pixel of the second image when the interpolate image frame is generated by motion estimation and motion compensation on the plurality of image frames.

The updating the first image may include detecting an image distorted area of the first image in the first image frame, detecting a pixel area corresponding to the image distorted area from the second image, and updating the image distorted area based on image data of the detected pixel area.

The updating the image distorted area may include detecting a pixel area corresponding to the image distorted area from the first image in the second image frame and updating the image distorted area based on image data of the detected pixel area.

The image distorted area may be formed on a boundary area between a first object and a background in the first image.

The updating the image distorted area may include detecting a discontinuous boundary between the updated image distorted area and the background in the first image and performing image filtering which is eliminating the detected discontinuous boundary.

The updating the image distorted area may include comparing pixel values of the first image where the image distorted area is updated and the second image in the first image frame and adjusting at least one of the pixel values of the first image and the second image so that a difference between the pixel values of the first image and the second image is within a predetermined range.

The updating the image distorted area may include updating a brightness value, a color value, or a contrast value between the first image and the second image.

The updating the image distorted area may include detecting a pixel area corresponding to the image distorted area from one of the second image of the first image frame, the first image of the second image frame, and the second image of the second image frame based on a binocular disparity between the first image of the first image frame and the second image of the first image frame and updating the image distorted area based on image data of the detected pixel area.

The second image frame may include the same object as a first object in the first image frame, and the updating the image distorted area may include determining whether the image data of the detected pixel area corresponds to the image distorted area based on extraction of a motion vector.

The image distorted area of the first image may appear when a first object changes in position based on a change of a depth value of the first object in the first image frame.

The updating the image distorted area may include generating a first image and a second image with respect to the first image frame based on a calculated binocular disparity when an image signal received by an image receiver corresponds to a 2D image, and the image distorted area of the first image may appear by a positional change of a first object based on the binocular disparity.

The image processing method may further include calculating a binocular disparity between the first image and the second image and detecting a pixel of the second image corresponding to the at least one pixel of the first image based on the binocular disparity.

The calculating the binocular disparity between the first image and the second image may include detecting the same object respectively from the first image and the second image of the first image frame and calculating a difference between pixel values based on a position of a first object in the first image and the second image as the binocular disparity.

The calculating the binocular disparity between the first image and the second image may include receiving the binocular disparity from an outside.

The updating the first image may include calculating a motion estimation value between a first image in the first image frame and a first image in the second image frame and detecting the pixel of the second image corresponding to the at least one pixel of the first image based on the calculated motion estimation value.

According to the present invention there is provided an apparatus and method as set forth in the appended claims. Other features of the invention will be apparent from the dependent claims, and the description which follows.

### BRIEF DESCRIPTION OF THE DRAWINGS

The above and/or other aspects will become apparent and more readily appreciated from the following description of exemplary embodiments, taken in conjunction with the accompanying drawings, in which:
FIG. 1 is a block diagram illustrating a configuration of an image processing apparatus according to a first exemplary embodiment;
FIG. 2 illustrates an exemplary method of generating an interpolated image frame by the image processing apparatus of the first exemplary embodiment of FIG. 1;
FIG. 3 illustrates an exemplary method of updating an image distorted area formed in a left eye image field of an image frame by the image processing apparatus of the exemplary embodiment of FIG. 1;
FIG. 4 is a flowchart illustrating an exemplary image processing method of the image processing apparatus of the exemplary embodiment of FIG. 1;
FIG. 5 illustrates an exemplary method of updating an image distorted area formed in a left eye image field of an image frame by an image processing apparatus according to a second exemplary embodiment;
FIG. 6 is a flowchart illustrating an exemplary mage processing method according to the second exemplary embodiment;
FIG. 7 illustrates an exemplary method of updating an image distorted area formed in a left eye image field of an image frame by an image processing apparatus according to a third exemplary embodiment;
FIG. 8 illustrates an exemplary method of updating an image distorted area formed in a right eye image field of an image frame by the image processing apparatus according to the third exemplary embodiment;
FIG. 9 is a flowchart illustrating an exemplary image processing method according to the third exemplary embodiment;
FIG. 10 illustrates an example of a method of updating an image distorted area formed in a left eye image field and a right eye image field by an image processing apparatus according to a fourth exemplary embodiment; and
FIG. 11 is a flowchart illustrating an image processing method according to the fourth exemplary embodiment.

### DETAILED DESCRIPTION OF EXEMPLARY EMBODIMENTS

Below, exemplary embodiments will be described in detail with reference to accompanying drawings so as to be realized by a person having ordinary knowledge in the art. The exemplary embodiments may be embodied in various forms without being limited to the exemplary embodiments set forth herein. Descriptions of well-known parts are omitted for clarity and conciseness, and like reference numerals refer to like elements throughout.

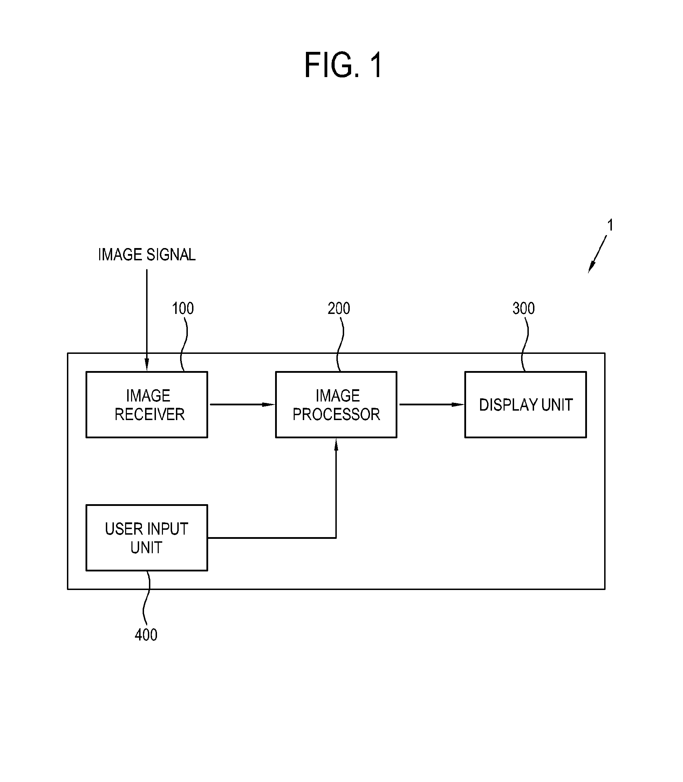

FIG. 1 is a block diagram schematically illustrating a configuration of an image processing apparatus 1 according to a first exemplary embodiment.

In this exemplary embodiment, the image processing apparatus 1 is configured as a television (TV) or a monitor including a display unit 300 to autonomously display images, but is not limited thereto. The image processing apparatus 1 may be configured as a set-top box, a digital versatile disc (DVD) player, a Blu-ray disc player, or the like, which does not include the display unit 300 but transmits images to an external TV or monitor, including any device capable of processing image signals or image data transmitted from an outside or stored therein to be displayed.

As shown in FIG. 1, the image processing apparatus 1 includes an image receiver 100 to receive an image signal, an image processor 200 to process the image signal received by the image receiver 100, a display unit 300 to display an image based on the image signal processed by the image processor 200, and a user input unit 400 manipulated by a user to output a preset control signal.

The image receiver 100 receives image signals from various image sources (not shown), and transmits the signals to the image processor 200. The image receiver 100 may receive a radio frequency (RF) signal transmitted from a broadcasting station wirelessly, or receive image signals in composite video, component video, super video, SCART, and high definition multimedia interface (HDMI) standards in a wired manner. Alternatively, the image receiver 100 may be connected to a web server (not shown) to receive a data packet of web contents. However, the exemplary embodiment is not limited thereto, and other structures may be substituted to perform the above-noted function, as would be understood by those skilled in the art.

The image processor 200 performs various types of preset image processing on an image signal transmitted from the image receiver 100. The image processor 200 outputs a processed image signal to the display unit 300 so that an image is displayed on the display unit 300.

The image processor 200 may perform various types of image processing, including but not limited to decoding corresponding to various image formats, de-interlacing, frame rate conversion, scaling, noise reduction to improve image quality, detail enhancement, and the like. The image processor 200 may be provided as a separate component to independently perform each process, or an integrated component which is multi-functional, such as a system-on-chip.

The display unit 300 displays an image based on an image signal output from the image processor 200. The display unit 300 may be configured in various display types using liquid crystals, plasma, light emitting diodes, organic light emitting diodes, a surface conduction electron emitter, a carbon nano-tube, nano-crystals, or the like, but is not limited thereto, and other display structures as understood by those skilled in the art may be substituted therefore.

The display unit 300 displays any type of images, for example, broadcasting program images, an electronic program guide (EPG), web contents, user interface (UI) images, and various applications. An image displayed on the display unit 300 may include a variety of objects represented in images.

The user input unit 400 may be configured as a remote controller including a plurality of keys or buttons. The user input unit 400 generates a control signal (e.g., preset) or command based on user's manipulation and transmits the generated command to the image processor 200 based on various communication schemes, for example, through infrared rays, Zigbee, an RF, Bluetooth, or the like.

Hereinafter, an exemplary frame rate conversion process of the image processor 200 is described.

For example, when the image processing apparatus 1 is based on the National Television System Committee (NTSC), the image processor 200 processes an image at 30 frames per second. When an image signal received by the image receiver 100 has a frame rate of 24 frames per second, the image signal has six frames per second fewer than processed by the image processor 300. Such a difference may lead to a deviation due to motion that occurs between image frames.

Accordingly, the image processor 200 performs compensation processes of motion estimation and motion compensation on the image frames of the received image based on motion of a corresponding image to generate interpolated image frames. Then, the image processor 200 inserts the interpolated image frames between the existing image frames to reduce a deviation that is unnatural motion between image frames.

The image processor 200 may include a frame rate conversion block (not shown) to generate interpolated image frames.

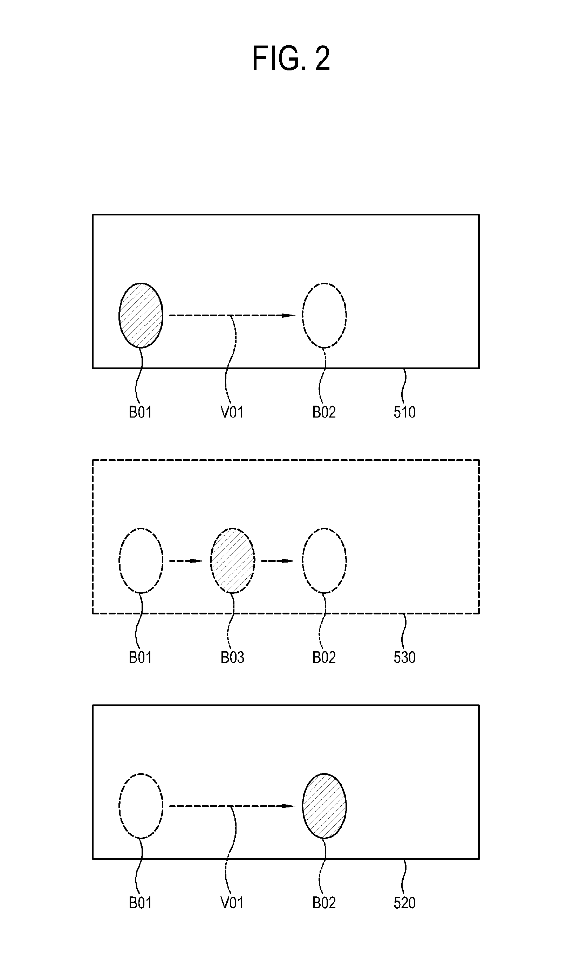

FIG. 2 illustrates an exemplary method of changing a frame rate of an image signal by generating an interpolated image frame 530 based on a plurality of image frames 510 and 520.

In FIG. 2, a first frame 510 and a second frame 520 illustrate chronologically successive frames among a plurality of image frames included in an image signal received by the image receiver 100. The first frame 510 and the second frame 520 respectively include the same objects B01 and B02, which are disposed in different positions in the first frame 510 from in the second frame 520. That is, the objects B01 and B02 move over time.

The image processor 200 calculates a motion vector V01 of a corresponding object B01 or B02 with respect to the objects B01 and B02 moving in the first frame 510 and the second frame 520. The image processor 200 generates a new third frame 530 and determines a position of a third object B03 in the third frame 530 based on the calculated motion vector V01. The image processor 200 disposes the third frame 530 chronologically between the first frame 510 and the second frame 520 and displays in the display unit 300.

Accordingly, the objects B01, B03, and B02 realize natural motion.

However, in changing a frame rate by the image processor 200, no image data or an image distorted area that is a distorted pixel area may appear in the interpolated third frame 530.

More specifically, when an image signal corresponds to a 3D image, the third frame 530 includes a left eye image field and a right eye image field. A position of the object B03 in the left eye image field is not correspondingly disposed to a position of the object B03 in the right eye image field with each other due to a binocular disparity (hereinafter, to be briefly called a disparity).

As described above, the image processor 200 generates the third frame 530 that is an interpolated image frame through motion estimation and motion compensation. However, an image distorted area may be formed on a boundary region between the object B03 and surroundings in the left eye image field and the right eye image field of the third frame 530.

In this exemplary embodiment, when a plurality of image frames respectively including a first image field and a second image field respectively corresponding to the first eye and the second eye of the user are received, the image processor 200 detects a pixel of the second image field corresponding to at least one pixel of the first image field and updates (e.g., corrects) the first image field based on information about the detected pixel of the second image field to correct an image distorted area.

For example, when an image distorted area occurring in a left eye image field included in one first image frame is detected, the image processor 200 extracts image data corresponding to at least one of a right eye image field of the same first image frame as the left eye image field is included and a right eye image field of a second image frame which is different from the first image frame, to correct the image distorted area.

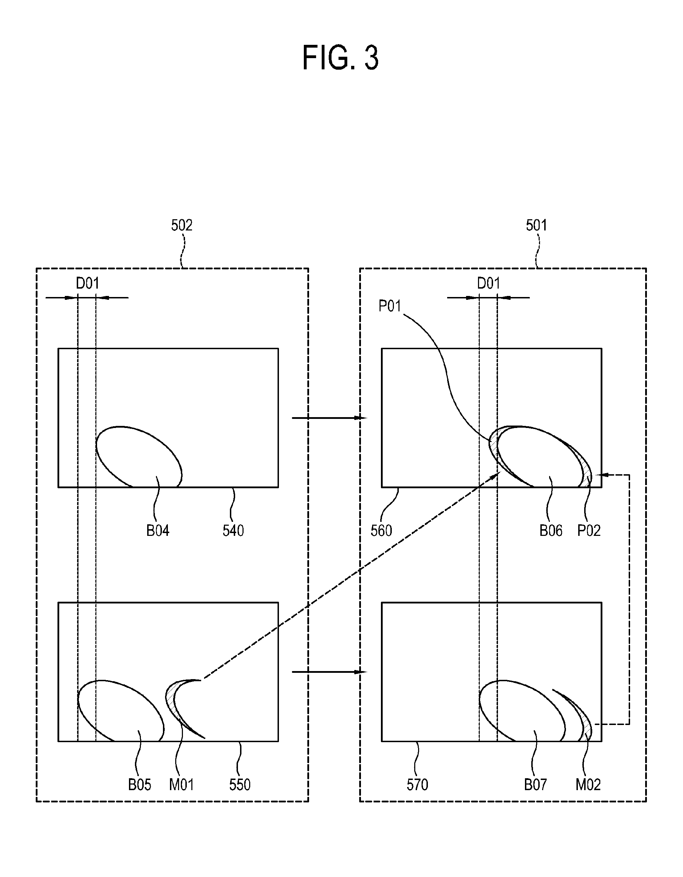

FIG. 3 illustrates an exemplary method of correcting image distorted areas P01 and P02 of a left eye image field 560 of a first image frame 501 including the left eye image field 560 and the right eye image field 570.

FIG. 3 shows a first image frame 501 corresponding to a 3D image and a second image frame 502 including a left eye image field 540 and a right eye image field 550 that is different from the first image frame 501. The first image frame 501 and the second image frame 502 may be chronological successive frames, or at least one different image frame may be chronologically interposed therebetween.

The first image frame 501 includes the left eye image field 560 and the right eye image field 570 respectively corresponding to the first eye and the second eye of the user. In the exemplary embodiment, the first image frame may be an interpolated image frame generated in a frame rate conversion process, as described above, but is not limited thereto. The exemplary embodiment may also be applied to the first image frame 501, which is not an interpolated image frame.

The left eye image field 560 and the right eye image field 570 of the first image frame 501 include the same objects B06 and B07. When the left eye image field 560 overlaps with the right eye image field 570, the objects B06 and B07 are not arranged in the same way, and are disposed in different positions as much as a disparity (e.g., preset) D01.

The image processor 200 detects the image distorted area P01 and P02 occurring on a boundary of the object B06 and a background from the left eye image field 560.

The image processor 200 detects pixel areas corresponding to the image distorted areas P01 and P02 from the right eye image field 570, since the left eye image field 560 of the first image field 501 is expected to have image data having a relatively higher similarity to the right eye image field 570 of the same first image frame 501 than a left eye image field/right eye image field of another image frame.

The image processor 200 detects the corresponding pixel areas from the right eye image field 570 based on the disparity D01 and determines whether image data in the pixel areas is suitable to correct the image distorted areas P01 and P02.

A pixel area M02 of the right eye image field 570 corresponding to P02 among the image distorted areas of the left eye image field 560 is not the object B07 but is a background area. Thus, the image processor 200 corrects the image distorted area P02 based on image data corresponding to the pixel area M02 of the right eye image field 570. The correction may be performed, for example, by a process of replacing image data of P02 by the image data of M02 or by a process of correcting the image data of P02 according to a pattern/algorithm based on the image data of M02.

Here, since a pixel area of the right eye image field 570 corresponding to P01 among the image distorted areas of the left eye image field 560 is not a background but is an area where the object B07 is positioned, image data of the corresponding pixel area cannot be displayed to correct P01.

The image processor 200 refers to the second image frame 502 including the same objects B04 and B05 at a previous time. The image processor 200 may correct P01 based on image data of any one of a left eye image field 540 and a right eye image field 550 of the second image frame 502.

For example, considering motion vectors of the objects B04, B05, B06, and B07, a pixel area of the right eye image field 550 corresponding to the image distorted area P01 has a higher possibility of having similar image data to P01 than the left eye image field 540 among the second image frame 502. Accordingly, the image processor 200 corrects P01 based on image data of a pixel area M01 of the right eye image field 550 of the second image frame 502 corresponding to P01.

As described above, the image distorted areas P01 and P02 of the left eye image field 560 of the first image frame 501 may be corrected based on image data corresponding to at least one of the right eye image field 570 of the first image frame 501 and the right eye image field 550 of the second image frame 502.

Although this exemplary embodiment illustrates only the correction of the left eye image field 560, the right eye image field 570 may be corrected in a substantially similar manner, and thus descriptions thereof are omitted for conciseness and clarity. Further, in this exemplary embodiment, the image distorted areas P01 and P02 appear on both right and left sides of the object B06 in the left eye image field 560, but may be formed on only at one position instead of at a plurality of positions.

The image processor 200 may correct a position of the object B06 of the left eye image field 560 based on motion vectors of the objects B05 and B07 between the right eye image field 570 of the first image frame 501 and the right eye image field 550 of the second image frame 502. Accordingly, an image of the left eye image field 560 may be displayed further accurately.

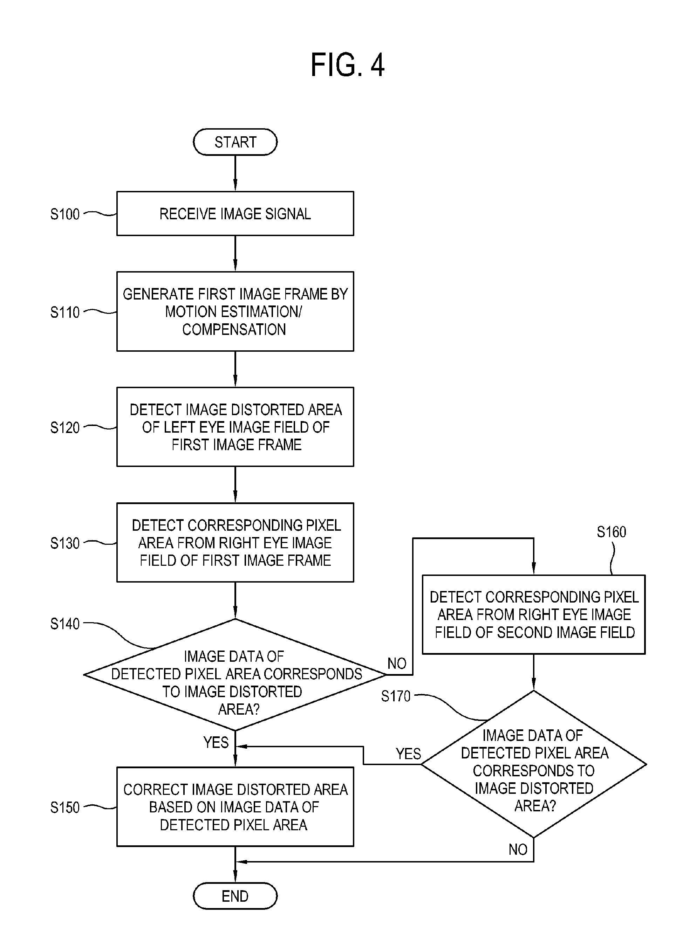

FIG. 4 is a flowchart illustrating the exemplary image processing method. The method of FIG. 4 describes a process of correcting an image distorted area of a left eye image field, but may be applied to a right eye image field.

As shown in FIG. 4, when the image receiver 100 receives an image signal (S100), the image processor 200 generates a first image frame that is an interpolated image frame based on motion estimation and motion compensation (S110).

The image processor 200 detects an image distorted area of a left eye image field of the first image frame (S120). The image processor 200 detects a pixel area corresponding to the detected image distorted area from a right eye image field of the first image frame (S130).

The image processor 200 determines whether image data of the detected pixel area corresponds to the image distorted area (S140). When the image data of the detected pixel area corresponds to the image distorted area, the image processor 200 corrects the image distorted area based on the image data of the detected pixel area (S150).

When the image data of the detected pixel area does not correspond to the image distorted area in operation S140, the image processor 200 detects a corresponding pixel area from the right eye image field of the second image frame that is different from the first image frame (S160). The image processor 200 determines image data of the detected pixel area corresponds to the image distorted area (S170). When the image data of the detected pixel area corresponds to the image distorted area, the image processor 200 corrects the image distorted area based on the image data of the detected pixel area (S150).

An image processing apparatus 1 of a second exemplary embodiment includes an image receiver 100, an image processor 200, a display unit 300, and a user input unit 400, described above with reference to the first exemplary embodiment. The components are substantially the same as in the first exemplary embodiment, and thus those substantially same descriptions are omitted.

An image signal received by the image receiver 100 may be encoded in a preset image format, such as MPEG-2, VC-1, H.264, or the like, in an image source (not shown). The image processor 200 decodes the encoded image signal and performs a process to display an image.

When an image format in which an image signal is encoded has compressing characteristics, a blocking area that is an image distorted area including compressed noise may appear in an image frame decoded by the image processor 200.

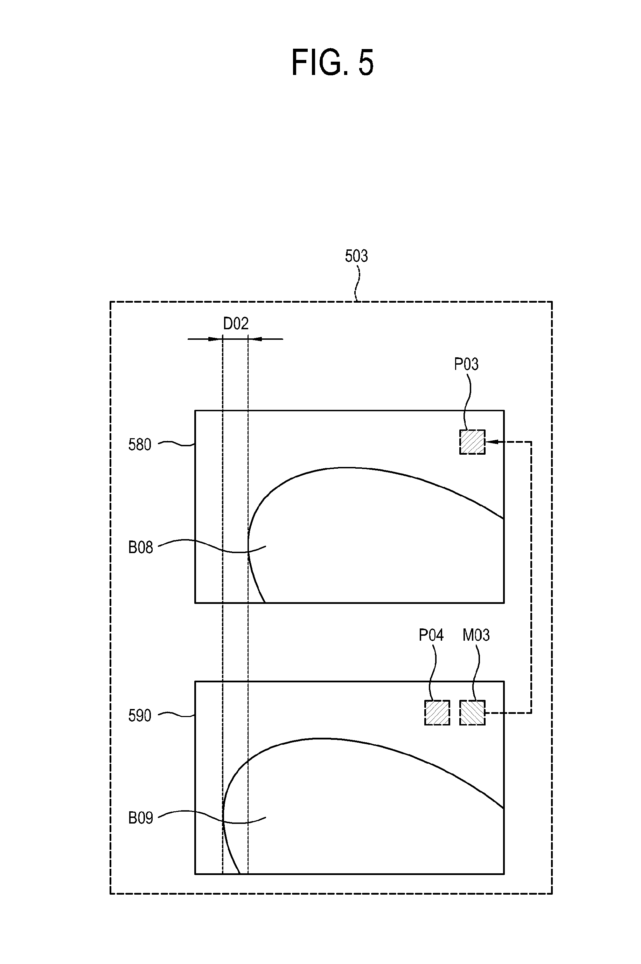

FIG. 5 illustrates an example of a method of correcting a blocking area P03 formed in a left eye image field 580 of a first image frame 580 and 590 according to this exemplary embodiment. The following exemplary embodiment discloses the method of correcting the blocking area P03 of the left eye image field 580, but also may be applied to a blocking area P04 of a right eye image field 590.

As shown in FIG. 5, the first image frame 503 decoded by the image processor 200 includes the left eye image field 580 and the right eye image field 590, which include the same objects B08 and B09.

A preset disparity D02 is applied to the left eye image field 580 and the right eye image field 590. Thus, when the left eye image field 580 overlaps with the right eye image field 590, the objects B08 and B09 are not positioned in the same way but are disposed in different positions corresponding to the disparity D02.

When the blocking areas P03 and P04 appear in the first image frame 580 and 590, the blocking area P03 of the left eye image field 580 does not correspond in position to the blocking area P04 of the right eye image field 590 due to the disparity D02. That is, when the left eye image field 580 overlaps with the right eye image field 590, the blocking areas P03 and P04 do not correspond to each other as much as the disparity D02, as the objects B08 and B09 do not corresponding to each other as much as the disparity D02.

A pixel area of the right eye image field 590 corresponding to the blocking area P03 of the left eye image field 580 is not an image distorted area and may be expected to include normal image data.

Accordingly, after decoding the image signal received by the image receiver 100, the image processor 200 detects whether the left eye image field 580 of the first image frame 580 and 590 includes the blocking area P03. When the blocking area P03 of the left eye image field 580 is detected, the image processor 200 calculates the disparity D02 between the left eye image field 580 and the right eye image field 590 of the first image frame 580 and 590.

An exemplary method of calculating the disparity D02 may be modified and is not limited to the present exemplary embodiment. For example, the image processor 200 detects the same objects B08 and B09 respectively from the left eye image field 580 and the right eye image field 590 and calculates a difference between pixel values based on positions of the respective objects B08 and B09 in the left eye image field 580 and the right eye image field 590 as the disparity D02. Alternatively, the image processor 200 receives and uses a determined disparity D02 from the user input unit 400 or another course.

The image processor 200 detects the pixel area M03 of the right eye image field 590 corresponding to the blocking area P03 based on the calculated disparity D02. Then, the image processor 200 corrects the blocking area P03 based on image data of the detected pixel area M03.

Accordingly, in this exemplary embodiment, the image distorted areas P03 and P04 appearing in the left eye image field 580 and the right eye image field 590 due to compressed noise are substantially corrected in decoding the image signal.

The correction may result in non-conformity of pixel values between at least part of pixel areas among pixel areas of the left eye image field 580 and the right eye image field 590. For example, in a first pixel area of the left eye image field 580 and a corresponding second pixel area of the right eye image field 590, a difference in a pixel value between the first pixel area and the second pixel area (for example, a difference in brightness, color, or contrast), may be out of a range (e.g., preset).

Thus, when the first pixel area and the second pixel area as disclosed above are detected, the image processor 200 adjusts a pixel value of at least one of the first pixel area and the second pixel area so that a difference between pixel values of the first pixel area and the second pixel area is within the preset range.

A range (e.g., preset) of a pixel value may be modified on characteristics of the apparatus, and is not specifically limited to the foregoing exemplary embodiment.

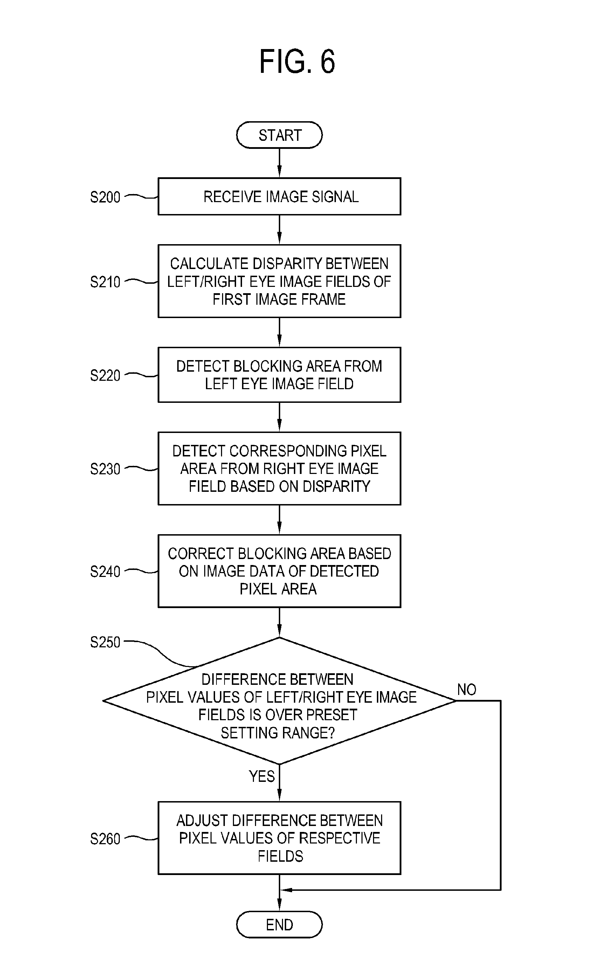

An exemplary image processing method of the image processing apparatus 1 according to the exemplary embodiment is described with reference to FIG. 6, which is a flowchart illustrating the exemplary image processing method. The method of FIG. 6 describes only a process of correcting a blocking area of a left eye image field but may be applied to a right eye image field, and thus description thereof is omitted.

When the image receiver 100 receives an image signal (S200), the image processor 200 decodes the image signal and calculates a disparity between the left eye image field and the right eye image field of a first image frame (S21 0). When the blocking area is detected from the left eye image field (S220), the image processor 200 detects a pixel area of the right eye image field corresponding to the blocking area of the left eye image field based on the calculated disparity (S230). The image processor 200 corrects the blocking area based on image data of the detected pixel area (S240).

The image processor 200 determines whether a difference between pixel values of the left eye image field and the right eye image field is out of a preset range (S250). When the difference is out of the range, the image processor 200 adjusts the difference between the pixel values of pixel areas of the left eye image field and the right eye image field to be within the range (S250).

An image processing apparatus 1 of a third exemplary embodiment includes an image receiver 100, an image processor 200, a display unit 300, and a user input unit 400, described above with reference to the first exemplary embodiment. The components are substantially the same as in the first exemplary embodiment, and thus descriptions thereof are omitted.

In 3D image frames, a depth value of an object may be changed and applied in real time. As the depth value of the object is based on a disparity between a left eye image field and a right eye image field, a change in the depth value of the object denotes a change in the disparity.

When the changed disparity is applied to the left eye image field and the right eye image field, a hole area that is a pixel area having no image data appears on a boundary area of the object in each of the left eye image field and the right eye image field.

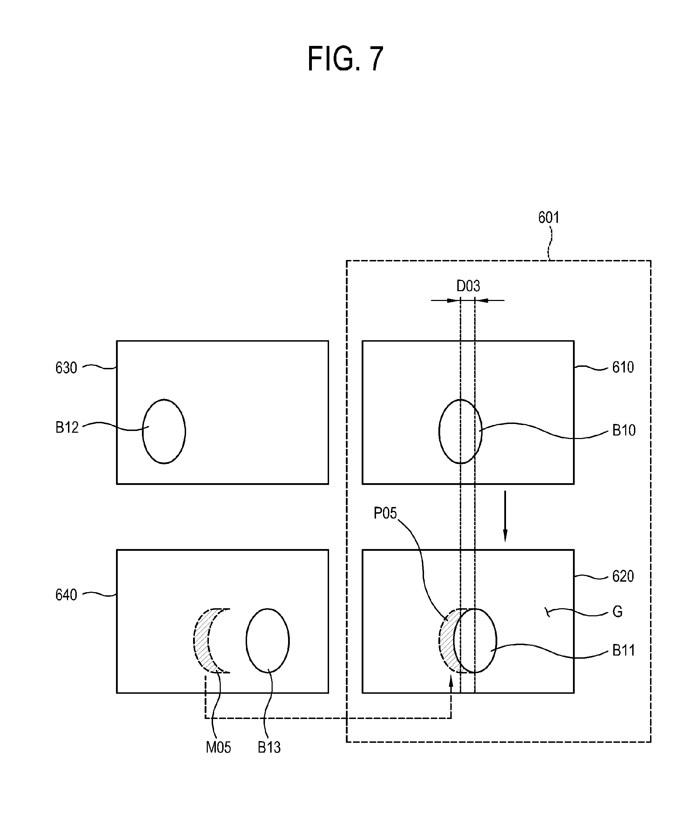

FIG. 7 illustrates an exemplary method of correcting an image distorted area P05 appearing in a left eye image field 620 of a first image frame 601.

When an event that is a change in a depth value of an object B10 in a left eye image field 610 of the first image frame 601 occurs, the image processor 200 generates the new left eye image field 620 by applying a disparity D03 corresponding to the changed depth value.

Comparing the generated left eye image field 620 with the previous left eye image field 610, an object B11 moves by the disparity D03 with respect to a background G. Due to the positional change of the object B11, a hole area P05 appears on a boundary area of the object B11 in the new left eye image field 620.

The image processor 200 detects a pixel area corresponding to the hole area P05 from a second image frame 630 or a third image frame 640 respectively including objects B12 and B13 respectively. The image processor 200 may select one of a right eye image field and a right eye image field of each of the second image frame 630 and the third image frame 640 respectively to detect the pixel area.

Then, the image processor 200 extracts motion vectors of the objects B12 and B13 and determines whether image data of the pixel area corresponds to the hole area P05 based on the motion vectors.

When the second image frame 630 is chronologically before the first image frame 601, and the third image frame 640 is chronologically after the first image frame 601, the image processor 200 may determine which image frame to select based on the motion vectors of the objects B12 and B13. For example, the objects B11, B12, and B13 move from left to right, whereas the hole area P05 is formed on a left side of the object B11 in the left eye image field 620 of the first image frame. Thus, a possibility that not the objects B12 and B13 but the background is positioned in a pixel area corresponding to the hole area P05 is higher in the third image frame 640 than in the second image frame 630. Therefore, the image processor 200 corrects the hole area P05 based on image data of a corresponding pixel area M05 of the third image frame 640.

The foregoing exemplary embodiment is an illustrative, non-limiting example. Additionally, when determining image data of a corresponding pixel area of the second image frame 630 to be suitable to correct the hole area P05, the image processor 200 may correct the hole area P05 based on the corresponding image data.

When the image processor 200 detects the hole area P05 in the left eye image field 620, after correcting the hole area P05 in the left eye image field 620, an artifact that is a discontinuous boundary area of image data may appear on a boundary area between the corrected hole area P05 and the background G.

Thus, after correcting the hole area P05, the image processor 200 detects generation of the artifact on the boundary area and performs image filtering that eliminates the detected artifact.

An exemplary method of detecting the artifact is not limited to the foregoing. For example, when a change in a neighboring pixel value is over a preset setting range, the image processor 200 may determine that there is an artifact in a corresponding position. Further, a method of image filtering is not limited. For example, the image processor 200 blurs the boundary area to relieve discontinuity of image data.

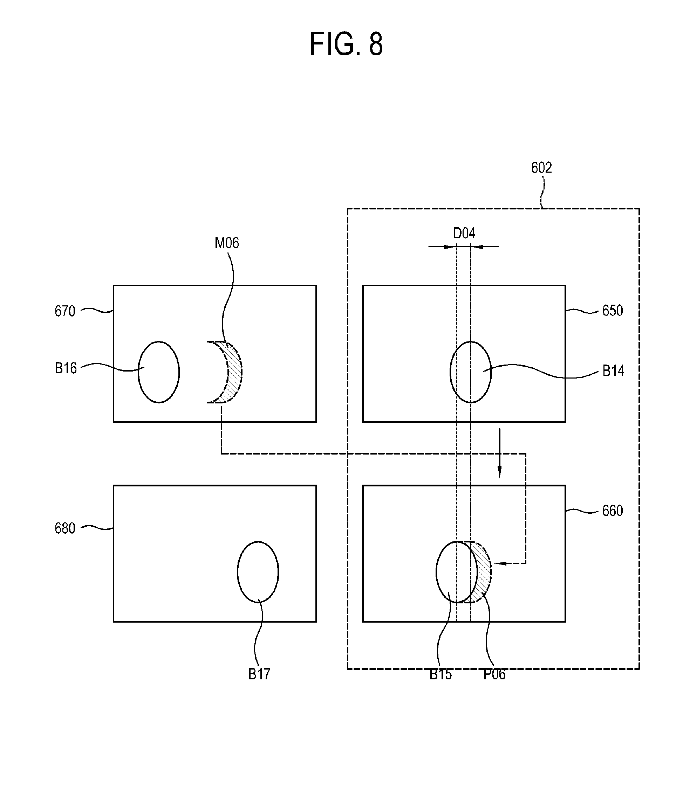

An exemplary method of correcting a hole area P06 appearing in a right eye image field 660 of the first image frame is described with reference to FIG. 8.

When an event that is a change in a depth value of an object B14 in a right eye image field 650 of the first image frame 602 occurs, the image processor 200 generates the new right eye image field 660 by applying a disparity D04 corresponding to the changed depth value. Accordingly, an object B15 moves by the disparity D04 in the new right eye image field 660, so that a hole area P06 appears.

The image processor 200 detects a pixel area corresponding to the hole area P06 from a second image frame 670 or a third image frame 680 in the substantially same manner as in FIG. 7, and determines whether image data of the pixel area corresponds to the hole area P06 based on motion vectors of objects B16 and B17.

The hole area P06 is formed on a right side of the object B15 in the right eye image field 660, and the objects B15, B16, and B17 move from left to right. Here, a possibility that not the objects B16 and B17 but a background is positioned in a pixel area corresponding to the hole area P06 is higher in the second image frame 670 than in the third image frame 680. Therefore, the image processor 200 corrects the hole area P06 based on image data of a corresponding pixel area M06 of the second image frame 670.

As described above, this exemplary embodiment may correct a hole area of a left eye image field or a right eye image field which appears due to a change in a disparity.

In the exemplary embodiment with reference to FIGS. 7 and 8, the hole areas P05 and P06 are respectively formed on the left side of the object B11 in the left eye image field 20 and on the right side of the object B15 in the right eye image field 660, which is an illustrative example. The hole areas P05 and P06 may be formed in different positions with respect to the objects B11 and B15 based on an increase or a decrease in a depth value of the objects B11 and B15. For example, the hole areas P05 and P06 may be formed on a right side of the object B11 in the left eye image field 620 and on a left side of the object B15 in the right eye image field 660.

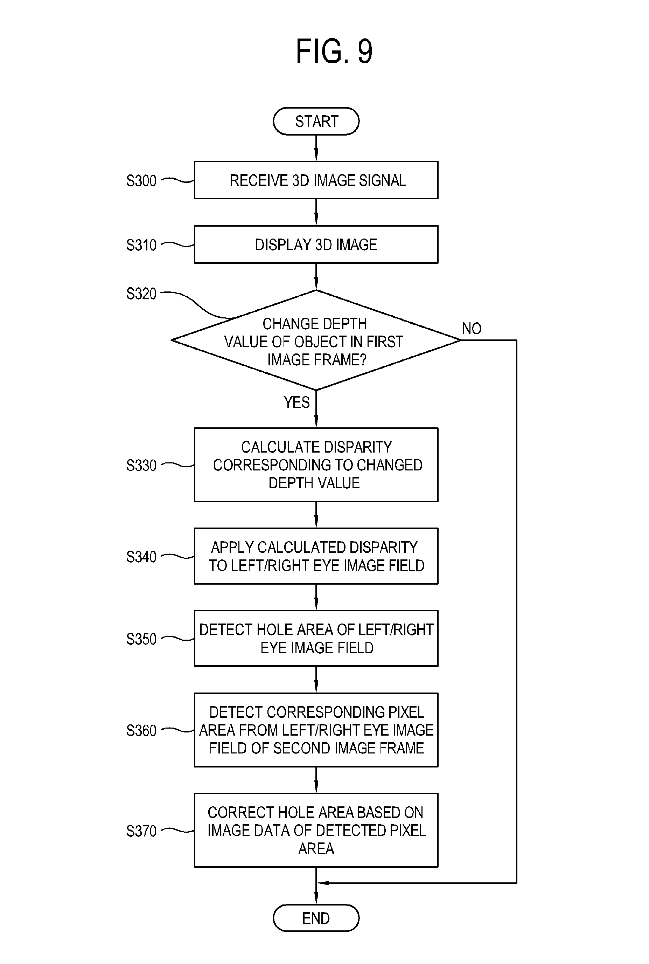

An image processing method of the image processing apparatus 1 according to the present exemplary embodiment is described with reference to FIG. 9, which is a flowchart illustrating the exemplary image processing method.

As shown in FIG. 9, when the image receiver 100 receives a 3D image signal (S300), the image processor 200 processes the image signal to display a 3D image (S310). When a depth value of an object in a first image frame of the image signal is changed (S320), the image processor 200 calculates a disparity corresponding to the changed depth value (S330). The image processor 200 applies the calculated disparity to each of a left eye image field and a right eye image field (S340).

The image processor 200 detects a hole area of the left eye image field and the right eye image field to which the calculated disparity is applied (S350), and detects a pixel area corresponding to the hole area from at least one of a left eye image field and a right eye image field of a second image frame different from the first image frame (S360).

The image processor 200 corrects the hole area based on image data of the detected pixel area (S370).

Hereinafter, a fourth exemplary embodiment is described.

When an image receiver 100 receives a 3D image signal, an image processor 200 operates in the substantially same manner as in the foregoing exemplary embodiment. However, unlike the 3D image signal, in a 2D image signal, one image frame is not divided into a left eye image field and a right eye image field.

Thus, when the image receiver 100 receives a 2D image signal, the image processor 200 extracts an object from an image frame and generates a left eye image field and a right eye image field by applying a preset disparity with respect to the extracted object.

While generating a 3D image frame from the 2D image signal, the object in a 2D image frame changes in position, and thus a hole area appears on a boundary area of the object.

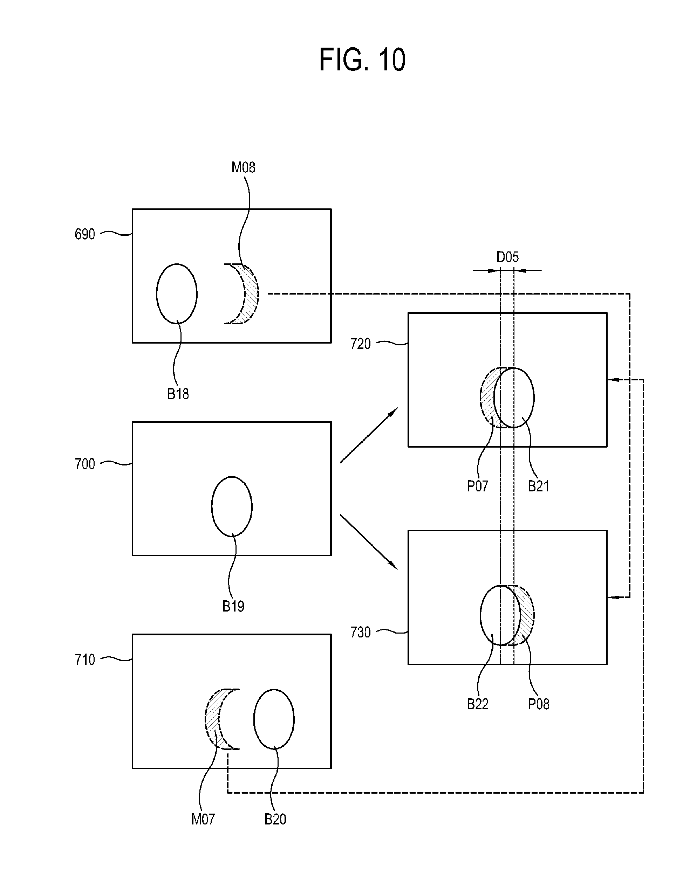

This exemplary embodiment illustrates a method of correcting the hole area. FIG. 10 illustrates an exemplary method of a correcting image distorted areas P07 and P08 appearing in a left eye image field 720 and a right eye image field 730.

As shown in FIG. 10, in a first image frame 700, a second image frame 690 before the first image frame 700, and a third image frame 710 after the first image frame 700, objects B18, B19, and B20 in the respective image frames 690, 700, and 710 change in position to move over time. The image frames 690, 700, and 710 are 2D image frames and are not divided into a left eye image field and a right eye image field.

The image processor 200 generates the left eye image field 720 and the right eye image field 730 by applying a preset disparity D05 with respect to an object B19 of the first image frame 700. The left eye image field 720 and the right eye image field 730 do not correspond to each other by the disparity D05, and hole areas P07 and P08 appear respectively on a left boundary area of an object B21 and a right boundary area of an object B22 due to a positional change of the objects B21 and B22.

The image processor 200 detects pixel areas M07 and M08 corresponding to the hole areas P07 and P08 from the second image frame 690 before the first image frame 700 or the third image frame 710 after the first image frame 700 and corrects the hole areas P07 and P08 based image data of detected pixel areas M07 and M08. The detection and the correction may be performed in substantially the same manner as in the above exemplary embodiments, and thus descriptions thereof are omitted.

As described above, this exemplary embodiment corrects the image distorted areas generated when the 2D image signal is converted into the 3D image signal.

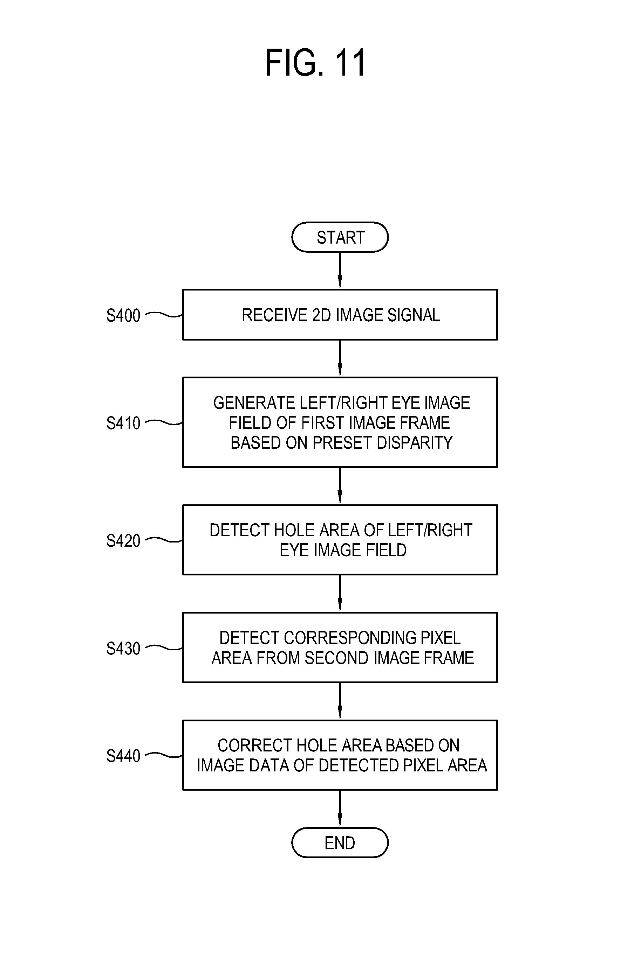

Hereinafter, an image processing method of an image processing apparatus 1 according to this exemplary embodiment is described with reference to FIG. 11.

When the image receiver 100 receives a 2D image signal (S400), the image processor 200 generates a left eye image field and a right eye image field of a first image frame based on a preset disparity (S410).

The image processor 200 detects a hole area in the left eye image field and the right eye image field (S420) and detects a pixel area corresponding to the hole area from a second image frame different from the first image frame (S430).

The image processor 200 corrects the hole area based on image data of the detected pixel area (S440).

The above-described exemplary embodiments (e.g., the methods illustrated in FIGS. 4, 6, 9 and 11) can be embodied as computer readable codes stored on a computer readable recording medium (for example, non-transitory, or transitory) and executed by a computer or processor. The computer readable recording medium is any data storage device that can store data which can be thereafter read by a computer system.

Examples of the computer readable recording medium include read-only memory (ROM), random-access memory (RAM), CD-ROMs, magnetic tapes, floppy disks, optical data storage devices, and carrier waves such as data transmission through the Internet. The computer readable recording medium can also be distributed over network coupled computer systems so that the computer readable code is stored and executed in a distributed fashion.

Although exemplary embodiments have been shown and described, it will be appreciated by those skilled in the art that changes may be made in these exemplary embodiments without departing from the principles of the inventive concept, the scope of which is defined in the appended claims. For example, the above exemplary embodiments are described with a TV as an illustrative example, but the display apparatus of the exemplary embodiments may be configured as a smart phone, a mobile phone, and the like.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An image processing apparatus comprising:
an image receiver which receives a plurality of image frames, each including a first image and a second image respectively corresponding to a first eye and a second eye of a user; and
an image processor which detects a pixel of the second image corresponding to at least one pixel of the first image, and updates the first image based on information about the detected pixel of the second image.

2. The image processing apparatus of claim 1, wherein the second image corresponds to at least one of a second image in a first image frame among the plurality of image frames and a second image in a second image frame which has a time difference with respect to the first image frame.

3. The image processing apparatus of claim 2, wherein the image processor detects a pixel of a first image in the second image frame corresponding to at least one pixel of a first image in the first image frame and updates an image signal based on information about the detected pixel of the first image.

4. The image processing apparatus of claim 3, wherein the image processor comprises a frame rate conversion unit to generate an interpolated image frame by motion estimation and motion compensation on the plurality of image frames and generates the interpolated image frame based on the information about the detected pixel of the first image and the information about the detected pixel of the second image.

5. The image processing apparatus of claim 2, wherein the image processor detects an image distorted area of the first image in the first image frame, detects a pixel area corresponding to the image distorted area from the second image, and updates the image distorted area based on image data of the detected pixel area.

6. The image processing apparatus of claim 5, wherein the image processor detects a pixel area corresponding to the image distorted area from the first image in the second image frame and updates the image distorted area based on image data of the detected pixel area.

7. The image processing apparatus of claim 5, wherein the image distorted area is formed on a boundary area between a first object and a background in the first image.

8. The image processing apparatus of claim 7, wherein the image processor detects a discontinuous boundary between the updated image distorted area and the background in the first image and performs image filtering which eliminates the detected discontinuous boundary.

9. The image processing apparatus of claim 5, wherein the image processor compares pixel values of the first image where the image distorted area is updated and the second image in the first image frame and adjusts at least one of the pixel values of the first image and the second image so that a difference between the pixel values of the first image and the second image is within a range.

10. The image processing apparatus of claim 5, wherein the image processor detects a pixel area corresponding to the image distorted area from one of the second image of the first image frame, the first image of the second image frame, and the second image of the second image frame based on a disparity between the first image of the first image frame and the second image of the first image frame and updates the image distorted area based on image data of the detected pixel area.

11. The image processing apparatus of claim 5, wherein the second image frame comprises a common object with a first object in the first image frame, and the image processor determines whether the image data of the detected pixel area corresponds to the image distorted area based on extraction of a motion vector.

12. The image processing apparatus of claim 5, wherein the image distorted area of the first image appears when a first object changes in position based on a change of a depth value of the first object in the first image frame.

13. The image processing apparatus of claim 5, wherein the image processor generates a first image and a second image with respect to the first image frame based on a calculated disparity when an image signal received by the image receiver corresponds to a 2D image, and the image distorted area of the first image appears by a positional change of a first object based on the disparity.

14. The image processing apparatus of claim 2, wherein the image processor calculates a disparity between the first image and the second image and detects a pixel of the second image corresponding to the at least one pixel of the first image based on the disparity.

15. The image processing apparatus of claim 14, wherein the image processor detects the same object respectively from the first image and the second image of the first image frame and calculates a difference between pixel values based on a position of the first object in a first image and the second image as the disparity.
